# EUROPÄISCHE PATENTSCHRIFT

(11) **EP 0 759 962 B1**
(45) Veröffentlichungstag und Bekanntmachung des Hinweises auf die Patenterteilung: **10.06.1998**
(21) Anmeldenummer: 95920047.8
(22) Anmeldetag: 16.05.1995
(51) Int. Cl.: C10G 1/10, C10B 53/00

(54) **VORRICHTUNG ZUR DEPOLYMERISATION VON ALT- UND ABFALLKUNSTSTOFFEN**
DEVICE FOR DEPOLYMERISING OLD AND WASTE PLASTICS
DISPOSITIF DE DEPOLYMERISATION DE MATIERES PLASTIQUES USAGEES ET DE RECUPERATION

(30) Priorität: 20.05.1994 DE 4417721; 10.08.1994 DE 4428355
(43) Veröffentlichungstag der Anmeldung: 05.03.1997
(73) Patentinhaber: VEBA OEL AG, 45896 Gelsenkirchen (DE)
(72) Erfinder: HOLIGHAUS, Rolf, D-45721 Haltern (DE); NIEMANN, Klaus, D-46147 Oberhausen (DE); STRECKER, Klaus, D-45888 Gelsenkirchen (DE); ULLRICH, Dieter, D-45131 Essen (DE); HECKA, Christian, D-45964 Gladbeck (DE)
(74) Vertreter: Berg, Dirk, Dr.
(86) Internationale Anmeldenummer: EP9501851
(87) Internationale Veröffentlichungsnummer: WO9532262

(56) Entgegenhaltungen:
- DE-A- 3 814 463
- DE-A- 4 124 697
- DE-A- 4 311 034

## Beschreibung

Die Erfindung betriffl eine Vorrichtung zur Depolymerisation von Alt- und Abfallkunststoffen sowie ein zugehöriges Verfahren.

In der EP 0 236 701-A 1 ist bei einem Verfahren zur Wiederaufarbeitung Kohlenstoff enthaltender Abfälle eine thermische Vorbehandlung in Gegenwart oder Abwesenheit von Wasserstoff von organischen Abfällen synthetischen Ursprungs als Vorstufe für eine nachfolgende hydrierende Behandlung beschrieben. Aus der Beschreibung als auch aus den Beispielen geht hervor, daß eine derartige Vorbehandlung in einem Rührreaktor durchgeführt werden kann.

In der EP 0 512 482 A2 ist eine thermische Behandlung solcher synthetischer organischer Abfälle beschrieben, bei dem in Abwesenheit von Wasserstoff keine bzw. eine nur geringe Koksbildung auftritt.

Altkunststoffe, wie sie z. B. aufgrund der deutschen Verpackungsverordnung verwertet werden müssen, weisen einen Gehalt an Fremdstoffen von bis zu 10 Gew.-% auf. Diese Fremdstoffe liegen z. T. als feine Füllstoffe und Pigmente vor, die in dem verflüssigten Altkunststoff praktisch keine Sinkgeschwindigkeit aufweisen. Andere inerte Bestandteile sind beispielsweise anhaftende Teile aus Metall z. B. Deckel aus Aluminium oder dünne Aluminium-Schichten aus Verbundfolien.

In der vorgeschalteten Sortierung und Konfektionierung ist es nicht oder nur mit extrem hohem Aufwand möglich, diese Metallfolien auszusortieren bzw. mechanisch/manuell zu entfernen. Die Konfektionierung der Altkunststoffe läßt derzeit Partikelgrößen von bis zu 10 mm zu. Im Extremfall sind daher auch Metallagglomerate bis zu dieser Abmessung möglich. Die mit dem Altkunststoff eingetragenen Metallteile weisen aufgrund ihrer Dichte und Abmessungen eine merkliche bis hohe Sedimentationsgeschwindigkeit im verflüssigten Kunststoff auf. Sie können daher Pumpen und andere empfindliche Elemente erodieren, was zu deren Zerstörung führen kann.

Um Alt- und Abfallkunststoffe thermisch depolymerisieren zu können, muß eine hohe Energiemenge auf hohem Temperaturniveau (etwa 400 °C) eingetragen werden.

Kunststoffe sind gegen Überhitzung sehr empfindlich. Eine solche Überhitzung führt zu unkontrollierter Zersetzung mit unerwünschten Nebenreaktionen .

Aufgabe der Erfindung ist es, die geschilderten Nachteile des Stands der Technik, insbesondere hinsichtlich der Überhitzungs- und Erosionsproblematik, zu beheben.

Es wird daher erfindungsgemäß vorgeschlagen, den Reaktorinhalt zum Schutz gegen Überhitzung über ein dem Reaktor angeschlossenes Kreislaufsystem zu fahren. Dieses Kreislaufsystem umfaßt in einer bevorzugten Ausführungsform einen Ofen/Wärmetauscher und eine leistungsstarke Pumpe. Der Vorteil dieses Verfahrens liegt darin, daß durch einen hohen Umlaufstrom über den externen Ofen/Wärmetauscher erreicht wird, daß einerseits die notwendige Temperaturüberhöhung des im Kreislaufsystem befindlichen Materials gering bleibt, andererseits günstige Übertragungsverhältnisse im Ofen/ Wärmetauscher moderate Wandtemperaturen ermöglichen. Dadurch werden lokale Überhitzungen und somit unkontrollierte Zersetzung und Koksbildung weitestgehend vermieden. Das Aufheizen des Reaktorinhalts erfolgt so vergleichsweise sehr schonend.

Ein hoher Umlaufstrom läßt sich vorzugsweise mit leistungsstarken Kreiselpumpen erreichen. Diese weisen jedoch, ebenso wie andere empfindliche Elemente des Kreislaufsystems, den Nachteil auf, daß sie empfindlich gegen Erosion sind.

Dem kann erfindungsgemäß dadurch entgegengewirkt werden, daß der in das Kreislaufsystem abgezogene Reaktorinhalt vor seinem Eintritt in die Abzugsleitung eine in den Reaktor integrierte Steigstrecke durchläuft, wo größere Feststoffpartikel mit entsprechend hoher Sinkgeschwindigkeit abgeschieden werden.

Die Aufgabe der Erfindung wurde demzufolge gelöst durch eine Vorrichtung zur Depolymerisation von Alt- und Abfallkunststoffen umfassend einen geschlossenen Reaktor (1) mit
a) Zugabevorrichtung (18) für die Alt- und Abfallkunststoffe, vorzugsweise im Kopfbereich des Reaktors,
b) Entnahmevorrichtung (7) für das Depolymerisat, vorzugsweise im Bodenbereich des Reaktors,
c) Vorrichtung (4) zum Abführen der entstehenden Gase und der kondensierbaren Produkte im Kopfbereich des Reaktors,
gekennzeichnet durch folgende Merkmale
- ein dem Reaktor zum schonenden Aufheizen des Reaktorinhalts angeschlossenes Kreislaufsystem,
- eine in den Reaktor integrierte Steigstrecke (2) zur Abtrennung gröberer Festkörperpartikel und
- eine in das Ende der Steigstrecke ragende, zum Kreislaufsystem gehörige Abzugsleitung (16).

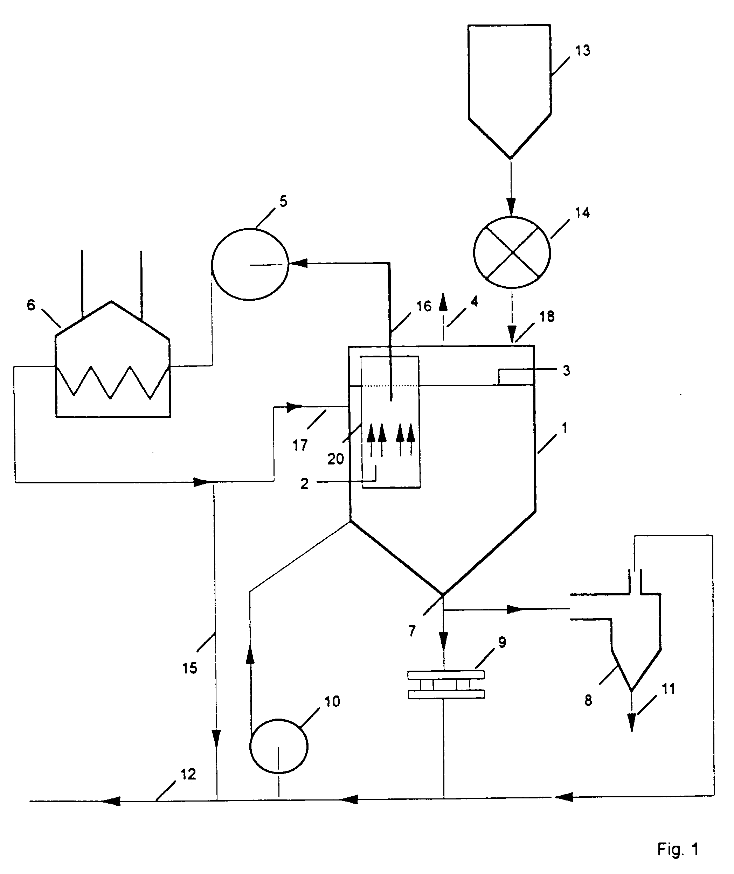

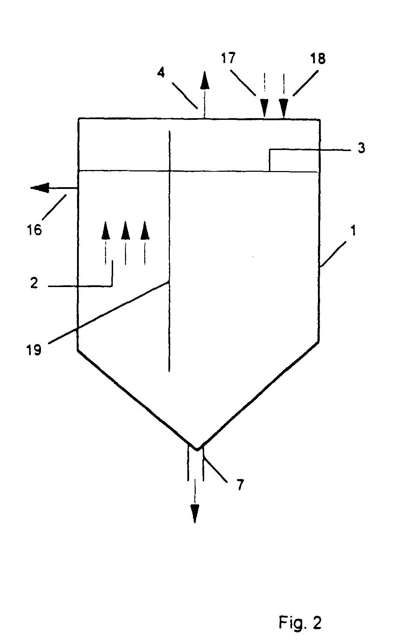

Der Reaktor ist also so gestaltet, daß die Abzugsvorrichtung für den Umlauf (Kreislaufsystem) am Ende einer Steigstrecke für den im wesentlichen flüssigen Reaktorinhalt liegt. Durch geeignete Festlegung der Steiggeschwindigkeit, im wesentlichen bestimmt durch die Dimensionierung der Steigstrecke und des Umlaufstroms, können Partikel mit höherer Sinkgeschwindigkeit, die für die Erosion ursächlich sind, aus dem Umlauf gehalten werden. In einer besonderen Ausführungsform ist die Steigstrecke innerhalb des Reaktors in Form eines Rohres ausgebildet, welches im wesentlichen senkrecht im Reaktor angebracht ist (vgl. Figur 1). In einer anderen bevorzugten Ausführungsform kann anstelle eines Rohres die Steigstrecke auch dadurch ausgebildet sein, daß eine Trennwand den Reaktor in Segmente unterteilt (vgl. Figur 2). Das Rohr bzw. die Trennwand schließen nicht mit dem Reaktordeckel ab, ragen aber über die Füllhöhe hinaus. Vom Reaktorboden sind Rohr bzw. Trennwand soweit entfernt, daß der Reaktorinhalt ungehindert und ohne größere Turbulenzen in die Steigstrecke einströmen kann.

Der Abzug der Feststoffe erfolgt am Boden des Reaktors zusammen mit der Menge an Depolymerisat, die zur weiteren Verarbeitung geführt werden soll. Damit die sedimentierten Inertstoffe möglichst vollständig aus dem Reaktor entfernt werden, ist die Entnahmevorrichtung für das Depolymerisat vorzugsweise im unteren Bereich, insbesondere am Boden des Reaktors, angebracht. Um die möglichst vollständige Entfernung der Inertstoffe weiter zu unterstützen, ist der Reaktor vorzugsweise im Bodenbereich verjüngt und in einer vorteilhaften Ausführungsform als ein auf seiner Spitze stehender Kegelmantel ausgebildet.

Des weiteren betriffl die Erfindung ein Verfahren zur Depolymerisation von Alt- und Abfallkunststoffen gekennzeichnet durch deren Behandlung bei erhöhter Temperatur in einer Vorrichtung gemäß einem der Ansprüche 1 bis 14. Vorzugsweise wird dabei das Verfahren aus der DE 43 11 034.7 zugrunde gelegt.

Nach diesem Verfahren erfolgt eine Aufteilung der Reaktionsprodukte in drei Hauptproduktströme:
1. Ein Depolymerisat, üblicherweise in einer Menge zwischen etwa 25 und 85 Gew.-%, bezogen auf die eingesetzte Kunststoffmischung, das je nach Zusammensetzung und den jeweiligen Erfordernissen in Produktteilströme aufgeteilt werden kann, die z. B. einer Sumpfphasenhydrierung, einer Druckvergasung und/oder ggf. einer Schwelung (Pyrolyse) zugeführt werden können. Es handelt sich dabei im wesentlichen um > 480 °C siedende schwere Kohlenwasserstoffe, die alle mit den Alt- und Abfallkunststoffen in den Prozeß eingetragenen Inertstoffe, wie Aluminium-Folien, Pigmente, Füllstoffe, Glasfasern, enthalten.
2. Ein Kondensat in einer Menge von bis zu 50 Gew.-% und mehr, bezogen auf die eingesetzte Kunststoffmischung, das in einem Bereich zwischen 25 °C und 520 °C siedet und ca. 1.000 ppm organisch gebundenes Chlor enthalten kann. Dieses Kondensat läßt sich z B. durch Hydrotreating an fest angeordneten handelsüblichen Co-Mo- oder Ni-Mo-Katalysatoren in ein hochwertiges synthetisches Rohöl (Syncrude) umwandeln oder auch direkt in Chlor tolerierende chemisch-technische Verfahren als kohlenwasserstoffhaltige Basissubstanz einbringen.
3. Ein Gas in Mengen von bis zu 20 Gew.-% bezogen auf die eingesetzte Kunststoff-Mischung, daß üblicherweise neben Methan, Ethan, Propan und Butan auch gasförmigen Chlorwasserstoff sowie leichtflüchtige, chlorhaltige Kohlenwasserstoff-Verbindungen enthält. Der Chlorwasserstoff läßt sich z. B. mit Wasser aus dem Gasstrom zur Gewinnung einer 30prozentigen wäßrigen Salzsäure herauswaschen. Das Restgas kann hydrierend in der Sumpfphase oder in einem Hydrotreater vom organisch gebundenen Chlor befreit und z. B. der Raffineriegas-Verarbeitung zugeführt werden.

Der Vorteil dieses Verfahrens besteht im wesentlichen darin, daß die anorganischen Nebenbestandteile der Alt- bzw. Abfallkunststoffe in der Sumpfphase aufkonzentriert und ggfs. ausgeschleust werden, während das diese Inhaltsstoffe nicht enthaltende Kondensat durch weniger aufwendige Verfahren weiter verarbeitet werden kann. Insbesondere über die optimale Einstellung der Prozeßparameter Temperatur und Verweilzeit kann erreicht werden, daß einerseits ein relativ hoher Anteil von Kondensat entsteht und andererseits das viskose Depolymerisat unter den Verfahrensbedingungen pumpbar bleibt.

Die Erfindung betrifft desweiteren ein Verfahren, das mittels der erfindungsgemäßen Vorrichtung durchgeführt wird. Es handelt sich hierbei um ein Verfahren zur Verarbeitung von Alt- oder Abfallkunststoffen zwecks Gewinnung von Chemierohstoffen und flüssigen Kraftstoffkomponenten durch Depolymerisieren der Einsatzstoffe zu einer pumpbaren sowie einer flüchtigen Phase, Auftrennen der flüchtigen Phase in einer Gasphase und ein Kondensat bzw. kondensierbare Depolymerisationsprodukte, die raffinierüblichen Standardprozeduren unterworfen werden können, wobei die nach Abtrennen der flüchtigen Phase verbleibende pumpbare Phase z. B. einer Sumpfphasenhydrierung, Vergasung, Schwelung oder einer Kombination dieser Verfahrensschritte unterworfen wird.

Ein für das erfindungsgemäße Verfahren günstiger Temperaturbereich für die Depolymerisation beträgt 150 bis 470 °C. Besonders geeignet ist ein Bereich von 250 bis 450 °C. Die Verweilzeit kann 0,1 bis 10 h betragen. Als besonders günstig hat sich ein Bereich von 0,5 bis 5 h erwiesen. Der Druck ist bei dem erfindungsgemäßen Verfahren eine weniger kritische Größe. So kann es durchaus bevorzugt sein, daß Verfahren bei Unterdruck durchzuführen, z. B. wenn flüchtige Bestandteile aus verfahrensbedingten Gründen abgezogen werden müssen. Aber auch relativ hohe Drucke sind praktikabel, erfordern jedoch einen höheren apparativen Aufwand. Im allgemeinen dürfte der Druck im Bereich von 0,1 bis 50 bar, insbesondere 0,5 bis 5 bar liegen. Das Verfahren läßt sich vorzugsweise gut bei Normaldruck oder leicht darüber (bis etwa 2 bar) ausführen, was den apparativen Aufwand deutlich reduziert. Um das Depolymerisat möglichst vollständig zu entgasen und um den Kondensatanteil noch zu erhöhen, wird das Verfahren vorteilhafterweise bei leichtem Unterdruck bis etwa 0,2 bar durchgeführt.

Das Depolymerisieren kann vorzugsweise unter Zusatz eines Katalysators, beispielsweise einer Lewis-Säure wie Aluminiumchlorid, einer radikalbildenden Substanz, z. B. einer Peroxidverbindung, oder einer Metallverbindung, beispielsweise eines mit einer Schwermetallsalzlösung imprägnierten Zeoliths, erfolgen.

Weitere bevorzugte Ausgestaltungen des Verfahrens bestehen in der Depolymerisation unter Inertgas, d. h. Gas, das sich gegenüber den Einsatzstoffen und Depolymerisationsprodukten inert verhält, z. B. N₂, CO₂, CO oder Kohlenwasserstoffe.

Das Verfahren kann auch unter Einleitung von Strippgasen und Strippdämpfen, wie Stickstoff, Wasserdampf oder Kohlenwasserstoffgasen durchgeführt werden. Grundsätzlich kann als Vorteil des Verfahens angesehen werden, daß in diesem Verfahrensschritt kein Wasserstoff zugesetzt werden muß und daß nicht das gesamte Reaktionsprodukt der aufwendigen Sumpfphasenhydrierung unterzogen wird.

Als flüssige Hilfsphase, bzw. Lösungsmittel oder Lösungsmittelgemisch eignen sich beispielsweise gebrauchte organische Lösungsmittel, also Lösungsmittelabfälle, Produktionsfehlchargen organischer Flüssigkeiten, Altöle oder Fraktionen aus der Erdölraffination, beispielsweise Vakuumrückstand. Ein besonderer Vorteil des Verfahrens liegt darin, daß den eingesetzten Alt- oder Abfallkunststoff keine flüssige Hilfsphase zugesetzt werden muß. Auf die Zugabe von Lösungsmitteln oder sogenannten Anreib- und Anmaischölen kann verzichtet werden. Dies gilt gleichermaßen für Fremdöle als auch für rezirkulierte Eigenöle des Prozesses.

Die Depolymerisation kann in einem üblichen Reaktor, z. B. einem Rührkesselreaktor durchgeführt werden, welcher zusätzlich eine Steigstrecke aufweist und dem ein externer Umlauf zum Aufheizen des Reaktorinhalts angeschlossen ist. Der Reaktor ist auf die entsprechenden Prozeßparameter, wie Druck und Temperatur, ausgelegt und muß auch gegen die eventuell entstehenden sauren Bestandteile wie Chlorwasserstoff resistent sein.

Das Depolymerisieren erfolgt vorzugsweise unter turbulenten Strömungsbedingungen, z. B. mittels mechanischer Rührer, aber auch durch Umpumpen des Reaktorinhalts. Dies gilt jedoch nur für den Reaktorteil, der nicht als Steigstrecke ausgebildet ist.

Im Vergleich zu den nachfolgenden Aufarbeitungsschritten, wie Hydrotreating, Schwelung, Hydrierung oder Vergasung, ist der apparative Aufwand für die Depolymerisation vergleichsweise gering. Dies gilt insbesondere, wenn das Verfahren in Nähe des Normaldrucks, also im Bereich zwischen 0,2 und 2 bar, ausgeführt wird. Im Gegensatz zur hydrierenden Depolymerisation ist der apparative Aufwand ebenfalls deutlich geringer. Dieser wird dadurch noch weiter reduziert, daß auf die Zugabe von Lösungsmitteln, Fremdölen oder rezirkulierten Eigenölen als Anreiboder Anmaischöle gänzlich verzichtet werden kann. Trotz dieser vergleichsweisen einfachen apparativen Ausstattung des Depolymerisationsreaktors können die nachfolgenden Verfahrensschritte bei optimaler Prozeßführung der Vorbehandlung um bis zu 50 % und mehr entlastet werden. Gleichzeitig entsteht bei der Depolymerisation gewollt ein hoher Anteil kondensierbarer Kohlenwasserstoffe, der durch bekannte und vergleichsweise wenig aufwendige Verfahren zu wertvollen Produkten aufgearbeitet werden kann. Außerdem ist das in der Vorbehandlung entstehende Depolymerisat nach Abtrennung von Gas und Kondensat einfach zu handhaben, da es pumpbar bleibt und in dieser Form ein gutes Einsatzmaterial für die nachfolgenden Verfahrensstufen darstellt.

Die in dem vorliegenden Verfahren einzusetzenden Kunststoffe sind z. B. Mischfraktionen aus Abfallsammlungen, u. a. durch die Duale System Deutschland GmbH (DSD). In diesen Mischfraktionen sind z. B. Polyethylen, Polypropylen, Polyvinylchlorid, Polystyrol, Polymer-Blends wie ABS sowie Polykondensate z. B. Polyethylenterephthalat (PET) enthalten. Einsetzbar sind auch Kunststoffproduktionsabfälle, gewerbliche Verpackungsabfälle aus Kunststoff, Rest-, Mischoder Reinfraktionen aus der kunststoffverarbeitenden Industrie, wobei für die Eignung, in dem vorliegenden Verfahren einsetzbar zu sein, die chemische Zusammensetzung dieser Kunststoffabfälle nicht kritisch ist. Geeignete Einsatzprodukte sind auch Elastomere, technische Gummiartikel oder Altreifen in geeignet vorzerkleinerter Form.

Die eingesetzten Alt- oder Abfallkunststoffe stammen beispielsweise aus Formteilen, Laminaten, Verbundwerkstoffen, Folien oder synthetischen Fasem. Beispiele für halogenhaltige Kunststoffe sind chloriertes Polyethylen (PEC), Polyvinylchlorid (PVC), Polyvinylidenchlorid (PVDC), Chloropren-Kautschuk, um nur einige wichtige Vertreter zu nennen. Aber auch insbesondere schwefelhaltige Kunststoffe, beispielsweise Polysulfone oder mit Schwefelbrücken vernetzte Kautschuke wie in Altreifen fallen in großen Mengen an und sind bei Vorhandensein der entsprechenden Ausrüstungen für die Vorzerkleinerung und Vorsortierung in Kunststoff- und Metallbestandteile einer Depolymerisation und weiteren Aufarbeitung zur Gewinnung von Chemierohstoffen oder auch Kraftstoffkomponenten zugänglich. Der bei diesen Vorbehandlungsstufen oder chemischen Umwandlungsverfahren im Verfahren anfallende Chlorwasserstoff geht überwiegend in das Abgas über, das abgetrennt und einer weiteren Verwertung zugeführt wird.

Unter den in dem vorliegenden Verfahren einzusetzenden Alt- oder Abfallkunststoffen sind synthetische Kunststoffe, Elastomere, daneben aber auch abgewandelte Naturstoffe einsetzbar. Hierunter fallen neben den bereits erwähnten Polymerisaten, insbesondere Thermoplasten, auch Duroplaste und Polyaddukte. Die hieraus gefertigten Erzeugnisse umfassen Halbzeuge, Einzelteile, Bauelemente, Verpackungen, Lager- und Transportbehälter sowie Konsumwaren. Unter die Halbzeuge fallen auch Tafeln und Platten (Leiterplatten) sowie Schichtpreßstoffplatten, die teilweise noch Metallbeschichtungen enthalten können und die, wie die übrigen einzusetzenden Produkte nach Vorzerkleinerung auf Teilchen- bzw. Stückgrößen von 0,5 bis 50 mm ggf. von Metall-, Glas- oder Keramikbestandteilen mittels geeigneter Klassierverfahren abgetrennt werden können.

Die genannten Alt- und Abfallkunststoffe fallen z. B. durch Sammlungen des DSD in Gemischen oder Gemengen unterschiedlicher Zusammensetzung an und können bis zu 10 Gew.-%, ggf. bis zu 20 Gew.-% anorganische Nebenbestandteile enthalten, wie Pigmente, Glasfasern, Füllstoffe wie Titan- oder Zinkoxid, Flammschutzmittel, pigmententhaltende Druckfarben, Ruß und auch Metalle z. B. metallisches Aluminium. Üblicherweise werden diese Kunststoffgemische in zerkleinerter Form eingesetzt.

Figur 1 zeigt eine beispielhafte Ausführung der erfindungsgemäßen Vorrichtung. In Reaktor (1) wird aus Vorratsbehälter (13) Alt- und Abfallkunststoff über Zugabevorrichtung (18) mittels einer gasdicht abschließenden Dosiervorrichtung (14) z. B. auf pneumatischem Wege eingebracht. Als eine solche Dosiervorrichtung ist beispielsweise eine Zellenradschleuse gut geeignet. Das Depolymerisat samt der enthaltenen Inertstoffe kann über Vorrichtung (7) am Boden des Reaktors entnommen werden. Die Zugabe des Kunststoffs sowie die Entnahme des Depolymerisats erfolgt vorteilhafterweise kontinuierlich und ist so gestaltet, daß in etwa eine bestimmte Füllhöhe (3) des Reaktorinhalts beibehalten wird. Über Vorrichtung (4) werden entstehende Gase und kondensierbare Produkte aus dem Kopfbereich des Reaktors abgezogen. Über Abzugsleitung (16) zum Kreislaufsystem wird der Reaktorinhalt über Pumpe (5) zum schonenden Aufheizen in Ofen / Wärmetauscher (6) geführt, um über Zufluß (17) in Reaktor (1) rezirkuliert zu werden. In Reaktor (1) ist Rohr (20) senkrecht angeordnet, welches eine Steigstrecke (2) für den Reaktorumlaufstrom bildet.

Der dem Reaktor entnommene Depolymerisatstrom ist um einen Faktor 10 bis 40 kleiner als der Umlaufstrom. Dieser Depolymerisatstrom wird über Naßmühle (9) gefahren, um die darin enthaltenen inerten Bestandteile auf eine für die weitere Verarbeitung zulässige Größe zu bringen. Der Depolymerisatstrom kann aber auch über eine weitere Trenneinrichtung (8) geführt werden, um von den inerten Bestandteilen weitgehend befreit zu werden. Geeignete Trenneinrichtungen sind beispielsweise Hydrozyklone oder Dekanter. Diese inerten Bestandteile (11) können dann separat entnommen und beispielsweise einer Wiederverwertung zugeführt werden. Optional kann auch ein Teil des über die Naßmühle bzw. über die Trenneinrichtung gefahrenen Depolymerisatstroms über eine Pumpe (10) wieder in den Reaktor zurückgeführt werden. Der übrige Teil wird der Weiterverarbeitung z. B. Sumpfphasenhydrierung, Schwelung oder Vergasung zugeführt (12). Ein Teil des Depolymerisats kann über eine Leitung (15) direkt dem Kreislaufsystems entnommen und der Weiterverarbeitung zugeführt werden.

Figur 2 zeigt einen ähnlich gebauten Reaktor wie in Figur 1 mit dem Unterschied, daß die Steigstrecke nicht durch ein Rohr ausgebildet ist, sondern durch einen Reaktorsegment, welches durch eine Trennwand (19) vom übrigen Reaktorinhalt separiert ist.

Bei dem Einsatz von Alt- und Abfallkunststoffen aus Haushaltssammlungen bestehen die über die Trenneinrichtung (8) ausgeschleusten inerten Bestandteile (11) überwiegend aus Aluminium, welches auf diesem Wege einer stofflichen Wiederverwertung zugeführt werden kann. Diese Ausschleusung und Wiederverwertung von Aluminium eröffnet zusätzlich die Möglichkeit, auch Verbundverpackungen vollständig stofflich zu verwerten. Diese Verwertung kann gemeinsam mit Kunststoffverpackungen erfolgen. Dies bietet den Vorteil, daß eine Trennung dieser Verpackungsmaterialien unterbleiben kann. Verbundverpackungen bestehen üblicherweise aus Papier oder Pappe verbunden mit einer Kunststoff- und/oder Aluminium-folie. Im Reaktor wird der Kunststoffanteil verflüssigt, das Papier bzw. die Pappe in Primärfasern zerlegt, die wegen ihrer geringen Sedimentationsneigung der Flüssigkeit folgen, und das Aluminium kann weitgehend getrennt gewonnen werden. Kunststoff und Papier werden nach der erfolgten Depolymerisation einer rohstofflichen Verwertung zugeführt.

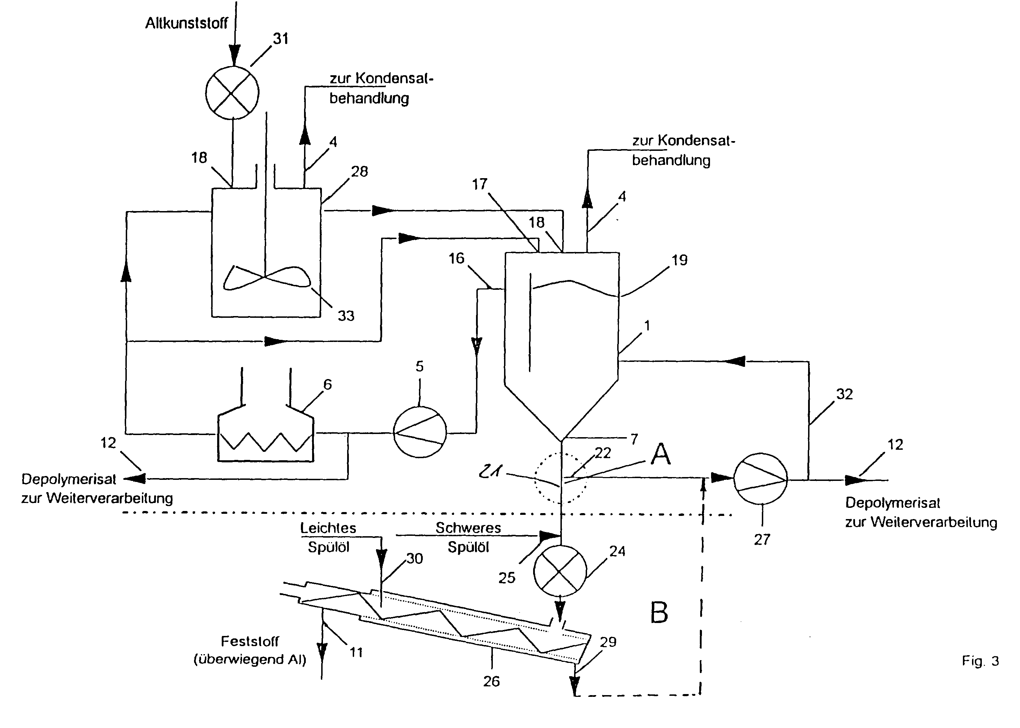

Figur 3 zeigt eine Depolymerisationsanlage mit zwei Behältern, die auf unterschiedlichem Temperatumiveau betrieben werden können, vorzugsweise mit einem Temperaturanstieg vom ersten zum zweiten Behälter. Der erste Depolymerisationsbehälter (28) ist vorzugsweise mit einem Rührer (33) ausgestattet, um die über Schleuse (31) zugeführten Alt- und Abfallkunststoffe schnell in das vorliegende heiße Depolymerisat einmischen zu können. Der nachgeschaltete zweite Depolymerisationsbehälter (1) entspricht dem der Figur 2. Der Kreislauf zum schonenden Aufheizen, im wesentlichen bestehend aus Pumpe (5) und Ofen/Wärmetauscher (6) ist daher feststoffarm. Das Depolymerisat einschließlich der festen Bestandteile wird am Boden des Reaktors abgezogen. Das Mengenverhältnis Feststoff/Flüssigkeit an der Entnahmevorrichtung (7) des Behälters (1) kann zwischen 1:1 und 1:1000 liegen.

Gemäß der vorliegenden Erfindung ist der Entnahmevorrichtung (7) eine im wesentlichen senkrechte Fallstrecke (21) mit einer hierzu im wesentlichen rechtwinklig angebrachten Abzweigung (22) unmittelbar nachgeschaltet.

Fallstrecke (21) und Abzweigung (22) sind in einer bevorzugten Ausführungsform als ein T-förmiges Rohr ausgebildet.

Die Abzweigung kann zusätzlich mit mechanischen Abscheidehilfen (23) ausgestattet sein.

Über Abzweigung (22) kann ein Strom von organischen, unter den vorliegenden Bedingungen im wesentlichen flüssigen Bestandteilen des Depolymerisats abgeleitet werden. Über Pumpe (27) gelangt das Depolymerisat zur Weiterverarbeitung oder kann auch zumindest teilweise über Leitung (32) in Reaktor (1) zurückgeführt werden.

Die abgeleitete Menge kann bis zu dem Tausendfachen der ausgeschleusten Feststoffmenge betragen. Im Extremfall und ggfs. vorübergehend kann auch nichts über Abzweigung (22) abgeleitet werden. Durch Festlegung der über Abzweigung (22) abgezogenen Depolymerisatmenge können geeignete Strömungsverhältnisse für den sicheren Austrag der Feststoffe gewährleistet werden. Gleichzeitig sollte der abgeleitete Strom so bemessen sein, daß Festkörperpartikel möglichst nicht in nennenswertem Umfang mitgerissen werden. Vorzugsweise beträgt das Verhältnis von ausgeschleuster Feststoffmenge zur abgeleiteten Menge 1 : 50 und 1 : 200.

Fallstrecke (21) bzw. das Fallrohr ist in einer besonderen Ausführungsform am unteren Ende mit einer Schleuse (24) versehen. Oberhalb dieser Schleuse ist eine Zugabevorrichtung (25) für Spülöl angebracht.

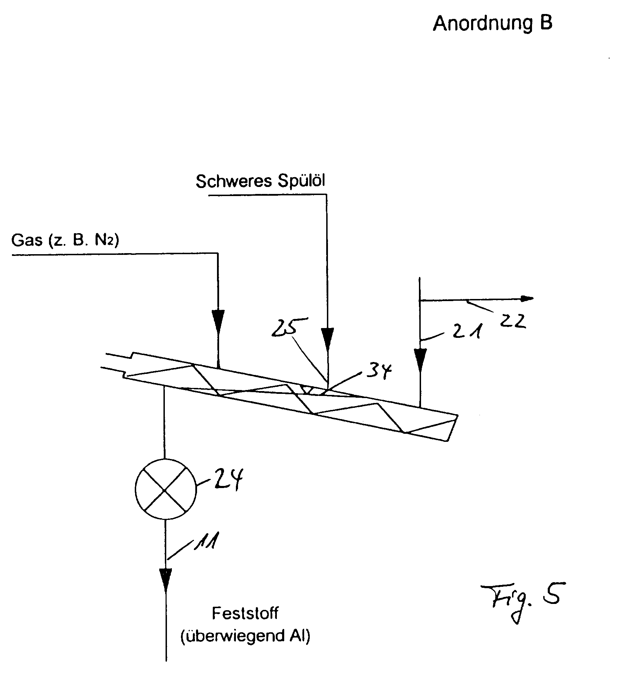

Figur 5 zeigt eine verfahrenstechnische Alternative, bei der der Fallstrecke (21) eine Trennvorrichtung (26) direkt nachgeschaltet ist. An dieser ist vorzugsweise eine Zugabevorrichtung (25) für Spülöl angebracht.

Über Zugabevorrichtung (25) wird Spülöl mit höherer Dichte als der des Depolymerisats in einer Menge zugegeben, die eine geringe aufwärtsgerichtete Strömungsgeschwindigkeit der Flüssigkeit innerhalb der Fallstrecke zwischen Zugabevorrichtung (25) und Abzweigung (22) hervorruft. So wird erreicht, daß Fallstrecke (21) bzw. das Fallrohr unterhalb der Abzweigung (22) immer mit relativ frischem Spülöl gefüllt ist. In diesem Teil von Fallstrecke (21) liegt eine sogenannte stabile Schichtung mit Spülöl vor. Wird über Abzweigung (22) nichts abgeleitet, steigt das Spülöl in Fallstrecke (21) und gelangt letztlich in Reaktor (1).

Während vorzugsweise die Hauptmenge der organischen Bestandteile des Depolymerisats durch Abzweigung (22) abgeleitet wird, passieren die im Depolymerisat enthaltenen, überwiegend anorganischen Festkörperpartikel, die eine ausreichende Sinkgeschwindigkeit aufweisen, den mit Spülöl gefüllten Teil von Fallstrecke (21). Hierzu werden die den Festkörperpartikeln noch anhaftenden organischen Depolymerisatbestandteile abgewaschen bzw. im Spülöl gelöst.

Die Differenz der Dichte zwischen Depolymerisat und Spülöl sollte mindestens 0,1 g/ml, vorzugsweise 0,3 bis 0,4 g/ml betragen. Das Depolymerisat weist bei einer Temperatur von 400°C eine Dichte von größenordnungsmäßig 0,5 g/ml auf. Als geeignetes Spülöl kann z. B. ein auf ca. 100°C erhitztes Vakuumgasöl mit einer Dichte von ca. 0,8 g/ml eingesetzt werden.

Die Länge des mit Spülöl gefüllten Teils der Fallstrecke (21) wird so bemessen, daß die Festkörperpartikel am unteren Ende der Fallstrecke (21) zumindest weitgehend von anhaftenden organischen Depolymerisatbestandteilen frei sind. Sie ist auch abhängig von Art, Zusammensetzung, Temperatur sowie der durchgesetzten Mengen des Depolymerisats und des eingesetzten Spülöls. Der Fachmann kann durch relativ einfache Versuche die optimale Länge des mit Spülöl gefüllten Teils der Fallstrecke (21) bestimmen.

Wie in Figur 3 dargestellt, werden die Festkörperpartikel mit einem Teil des Spülöls über Schleuse (24) ausgetragen. Schleuse (24) dient zur druckmäßigen Trennung des vorhergehenden und des nachfolgenden Anlagenteils. Bevorzugt wird eine Zellenradschleuse eingesetzt. Aber auch andere Schleusenarten, wie z. B. Taktschleusen sind für diesen Zweck geeignet. Die ausgetragene Mischung weist einen Festkörpergehalt von etwa 40 bis 60 Gew.-% auf.

Zweckmäßig folgt Schleuse (24) eine weitere Trennvorrichtung (26) zur Trennung von Spülöl und Festkörperpartikeln.

Vorzugsweise wird als Trennvorrichtung (26) ein Kratzförderer oder eine Förderschnecke eingesetzt. Diese sind in Förderrichtung schräg nach oben gerichtet. Bevorzugt ist ein Winkel zur Horizontalen von 30 bis 60° insbesondere etwa 45°.

Figur 5 zeigt eine andere Verfahrensvariante. Hier durchlaufen die Festkörperpartikel nach Passieren der Fallstrecke (21) sofort die Trennvorrichtung (26). Über ein Gaspolster, z. B. aus Stickstoff, und die Zugabe von Spülöl wird in der Trennvorrichtung (26) ein gewünschtes Flüssigkeitsniveau (34) eingestellt. Die von Spülöl weitgehend befreiten Festkörperpartikel werden anschließend über Schleuse (24), z. B. eine Zellenradschleuse oder Taktschleuse, ausgetragen.

In Figur 3 ist schematisch eine Entwässerungschnecke (26) dargestellt, die als geeignete Trennvorrichtung fungieren kann. Über Leitung (30) kann auch ein Spülöl mit einer geringeren Dichte, z. B. ein Mitteldestillatöl aufgegeben werden. Hierdurch wird das schwerere Spülöl von den Festkörperpartikeln abgewaschen. Das niedrigviskosere leichte Spülöl läßt sich einfacher und ohne größere Schwierigkeiten zumindest weitgehend von den Festkörperpartikeln abtrennen. Das gebrauchte Spülöl kann über Leitung (29) abgeführt, oder zumindest teilweise in das über Abzweigung (22) abgeleitete Depolymerisat eingebracht werden. Die Trennvorrichtung (26) arbeitet hier vorzugsweise unter atmosphärischen Bedingungen. Die so abgetrennten Festkörperpartikel werden über Leitung (11) ausgetragen und können einer Wiederverwertung zugeführt werden.

Werden als Alt- und Abfallkunststoffe solche aus Haushaltssammlungen eingesetzt, besteht der über Leitung (11) ausgetragene Feststoff überwiegend aus metallischem Aluminium, das einer anschließenden stofflichen Verwertung dieses Materials zugeführt werden kann.

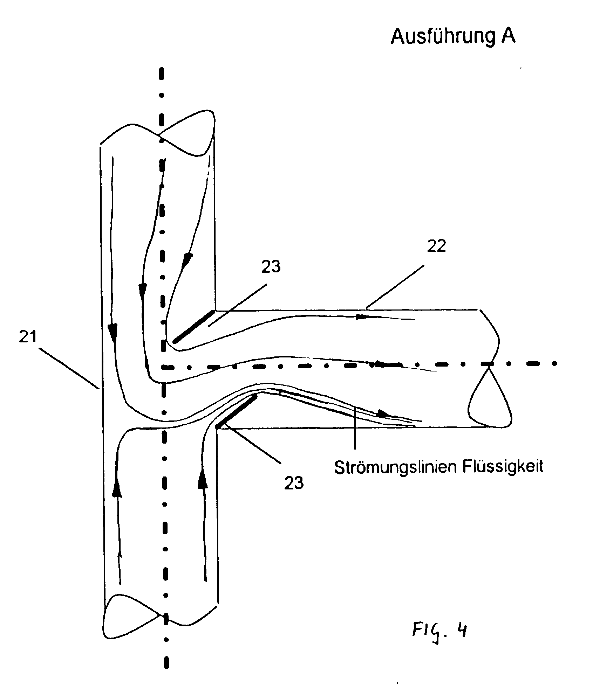

Figur 4 zeigt als Ausschnittsvergrößerung der Figur 3 die T-förmige Anordnung von Fallstrecke (21) und Abzweigung (22). Ebenfalls dargestellt sind mechanische Abscheidehilfen (23) und die schematisch mit Pfeilen eingezeichneten Strömungsverhältnisse.

### Beispiel

| Stoffwerte: | |
|---|---|
| Wärmebedarf für Depolymerisation von Altkunststoffen: | 350 kWh/t |
| Depolymerisations-Temperatur: | 400 °C |
| zulässige Temperaturüberhöhung: | 25 °C |

| Auslegung des Reaktors: | |
|---|---|
| Durchsatz: | 10 t/h |
| mittlere Verweilzeit: | 4 h |
| notwendiger Umlauf des Kreislaufsystems. | 370 m³/h |

Die integrierte Sedimentationsstrecke, die so ausgelegt ist, daß der Austrag von Aluminium-Folie der Dicke > 0,1 mm und der Abmessung > 1 x 1 mm verhindert wird, ist wie folgt dimensioniert:

| | |
|---|---|
| Äquivalenzdurchmesser der Aluminium-Folie berechnet als Kugel mit gleichem Volumen: | 0,576 mm |
| Sedimentationsgeschwindigkeit als Kugel: | 0,15 m/s |
| Sedimentationsgeschwindigkeit als Plättchen: | 0,07 m/s |
| Viskosität des Reaktorinhalts bei 175 °C: | 200 m Pas |

| Ergebnis: | |
|---|---|
| Querschnitt Sedimentationsstrecke: | 1,47 m² |
| Länge der Sedimentationsstrecke: | 4,4 m |

Durch Anordnung einer solchen Steigstrecke im Reaktor wurde erreicht, daß nur Feststoffteilchen mit sehr geringer Sedimentationsneigung durch den Umlauf gepumpt wurden. Erosion in der Umwälzpumpe trat praktisch nicht auf.

## Patentansprüche

1. Vorrichtung zur Depolymerisation von Alt- und Abfallkunststoffen umfassend einen geschlossenen Reaktor (1) mit
a) Zugabevorrichtung (18) für die Alt- und Abfallkunststoffe, vorzugsweise im Kopfbereich des Reaktors,
b) Entnahmevorrichtung (7) für das Depolymerisat, vorzugsweise im Bodenbereich des Reaktors,
c) Vorrichtung (4) zum Abführen der entstehenden Gase und der kondensierbaren Produkte im Kopfbereich des Reaktors,
gekennzeichnet durch folgende Merkmale
- ein dem Reaktor zum schonenden Aufheizen des Reaktorinhalts angeschlossenes Kreislaufsystem
- eine in den Reaktor integrierte Steigstrecke (2) zur Abtrennung gröberer Festkörperpartikel und
- eine in das Ende der Steigstrecke ragende, zum Kreislaufsystem gehörige Abzugsleitung (16).

2. Vorrichtung nach Anspruch 1, dadurch gekennzeichnet, daß die Steigstrecke in Form eines im Reaktor im wesentlichen senkrecht angebrachten Rohres (20) ausgebildet ist.

3. Vorrichtung nach Anspruch 1, dadurch gekennzeichnet, daß die Steigstrecke durch eine den Reaktor in Segmente unterteilende Trennwand (19) ausgebildet ist.

4. Vorrichtung nach mindestens einem der vorstehenden Ansprüche, dadurch gekennzeichnet, daß der Reaktor sich im Bodenbereich verjüngt, vorzugsweise in Form eines auf seiner Spitze stehenden Kegelmantels.

5. Vorrichtung nach mindestens einem der vorstehenden Ansprüche, dadurch gekennzeichnet, daß das Kreislaufsystem zum schonenden Aufheizen des Reaktorinhalts Abzugsleitung (16), Zufuhrleitung (17) sowie Pumpe (5) und Ofen / Wärmetauscher (6) umfaßt.

6. Vorrichtung nach mindestens einem der vorstehenden Ansprüche, dadurch gekennzeichnet, daß der Entnahmevorrichtung (7) eine im wesentlichen senkrechte Fallstrecke (21) mit einer hierzu im wesentlichen rechtwinklig angebrachten Abzweigung (22) nachgeschaltet ist.

7. Vorrichtung nach mindestens einem der vorstehenden Ansprüche, dadurch gekennzeichnet, daß die Abzweigung (22) mit mechanischen Abscheidehilfen (23) ausgestattet ist.

8. Vorrichtung nach mindestens einem der vorstehenden Ansprüche, dadurch gekennzeichnet, daß die Fallstrecke (21) an ihrem unteren Ende mit einer Schleuse (24) versehen ist.

9. Vorrichtung nach Anspruch 8, dadurch gekennzeichnet, daß oberhalb der Schleuse (24) eine Zugabevorrichtung (25) für Spülöl angebracht ist.

10. Vorrichtung nach Anspruch 9, dadurch gekennzeichnet, daß der Schleuse (24) eine Trennvorrichtung (26) zur Trennung von Spülöl und Festkörperpartikeln nachgeschaltet ist.

11. Vorrichtung nach mindestens einem der Ansprüche 1 bis 7, dadurch gekennzeichnet, daß der Fallstrecke (21) eine Trennvorrichtung (26) nachgeschaltet ist.

12. Vorrichtung nach Anspruch 11, dadurch gekennzeichnet, daß an der Trennvorrichtung (26) eine Zugabevorrichtung (25) für Spülöl angebracht ist.

13. Vorrichtung nach Anspruch 11 oder 12, dadurch gekennzeichnet, daß der Trennvorrichtung (26) eine Schleuse (24) nachgeschaltet ist.

14. Vorrichtung nach Anspruch 10 oder 11, dadurch gekennzeichnet, daß die Trennvorrichtung (26) ein Kratzförderer oder eine Förderschnecke ist.

15. Verfahren zur Depolymerisation von Alt- und Abfallkunststoffen, gekennzeichnet durch deren Behandlung bei erhöhter Temperatur in einer Vorrichtung gemäß einem der Ansprüche 1 bis 14.

16. Verfahren nach Anspruch 15, dadurch gekennzeichnet, daß über Zugabevorrichtung (25) ein Spülöl mit höherer Dichte als der des Depolymerisats in einer Menge zugegeben wird, die eine geringe aufwärtsgerichtete Strömungsgeschwindigkeit der Flüssigkeit innerhalb der Fallstrecke zwischen Zugabevorrichtung (25) und Abzweigung (22) hervorruft.

17. Verfahren nach Anspruch 15 oder 16, dadurch gekennzeichnet, daß das dem Reaktor entnommene Depolymerisat die Fallstrecke (21) durchläuft und ein Strom von organischen, im wesentlichen flüssigen Bestandteile des Depolymerisats durch Abzweigung (22) abgeleitet wird, während Festkörperpartikel mit ausreichender Sinkgeschwindigkeit den mit Spülöl gefüllten Teil der Fallstrecke passieren.

18. Verfahren nach Anspruch 17, dadurch gekennzeichnet, daß die Festkörperpartikel nach Passieren der Fallstrecke (21) mit einem Teil des Spülöls über Schleuse (24) ausgetragen werden.

19. Verfahren nach Anspruch 18, dadurch gekennzeichnet, daß mittels einer Trennvorrichtung (26) die Festkörperpartikel aus dem über Schleuse (24) ausgetragenen Gemisch abgetrennt werden.

20. Verfahren nach Anspruch 19, dadurch gekennzeichnet, daß in der Trennvorrichtung (26) durch Aufgabe eines leichteren Spülöls das schwerere Spülöl ausgewaschen wird.

21. Verfahren nach Anspruch 15 oder 16, dadurch gekennzeichnet, daß die Festkörperpartikel nach Passieren der Fallstrecke (21) eine Trennvorrichtung (26) durchlaufen.

22. Verfahren nach Anspruch 21, dadurch gekennzeichnet, daß die von Spülöl weitgehend befreiten Festkörperpartikel über eine Schleuse (24) ausgetragen werden.

## Claims

1. Device for depolymerizing used and waste plastics, comprising a closed reactor (1) having
a) charging device (18) for the used and waste plastics, preferably in the head region of the reactor,
b) discharging device (7) for the depolymerized material, preferably in the base region of the reactor,
c) device (4) for removing the gases produced and the condensable products in the head region of the reactor,
characterized in that there is connected to the reactor a circulation system for the mild heating of the reactor contents which traverse a riser section (2) integrated into the reactor for removing fairly coarse solid particles having correspondingly high settling rate before entry into the take-off line (16).

2. Device according to Claim 1, characterized in that the riser section is designed in the form of a pipe (20) fitted essentially vertically in the reactor.

3. Device according to Claim 1, characterized in that the riser section is formed by a partition (19) which subdivides the reactor into segments.

4. Device according to at least one of the preceding claims, characterized in that the reactor tapers in the base region, preferably in the form of a conical jacket standing on its tip.

5. Device according to at least one of the preceding claims, characterized in that the circulation system for mildly heating the reactor contents comprises take-off line (16), feedline (17) as well as pump (5) and oven/heat exchanger (6).

6. Device according to at least one of the preceding claims, characterized in that an essentially vertical downcomer section (21) having a branch (22) fitted essentially at right angles thereto is connected downstream of the discharging device (7).

7. Device according to at least one of the preceding claims, characterized in that the branch (22) is fitted with mechanical separating aids (23).

8. Device according to at least one of the preceding claims, characterized in that the downcomer section (21) is provided with a sluice (24) at its lower end.

9. Device according to Claim 8, characterized in that a charging device (25) for flushing oil is fitted above the sluice (24).

10. Device according to Claim 9, characterized in that a separating device (26) for separating flushing oil and solid particles is connected downstream of the sluice (24).

11. Device according to at least one of Claims 1 to 7, characterized in that a separating device (26) is connected downstream of the downcomer section (21).

12. Device according to Claim 11, characterized in that a charging device (25) for flushing oil is fitted to the separating device (26).

13. Device according to Claim 11 or 12, characterized in that a sluice (24) is connected downstream of the separating device (26).

14. Device according to Claim 10 or 11, characterized in that the separating device (26) is a trough scraper or a worm conveyor.

15. Process for depolymerizing used and waste plastics, characterized by their treatment at elevated temperature in a device in accordance with one of Claims 1 to 14.

16. Process according to Claim 15, characterized in that there is added by means of charging device (25) a flushing oil which has higher density than that of the depolymerized material in an amount which causes a low, upwardly directed flow velocity of the liquid inside the downcomer section between charging device (25) and branch (22).

17. Process according to Claim 15 or 16, characterized in that the depolymerized material removed from the reactor passes through the downcomer section (21) and a flow of organic, essentially liquid constituents of the depolymerized material is diverted through branch (22), while solid particles having adequate settling rate pass through that part of the downcomer section which is filled with flushing oil.

18. Process according to Claim 17, characterized in that the solid particles are discharged via sluice (24) with some of the flushing oil after passing through the downcomer section (21).

19. Process according to Claim 18, characterized in that the solid particles are removed from the mixture discharged via sluice (24) by means of a separating device (26).

20. Process according to Claim 19, characterized in that the heavier flushing oil is washed out in the separating device (26) by applying a lighter flushing oil.

21. Process according to Claim 15 or 16, characterized in that the solid particles traverse a separating device (26) after passing through the downcomer section (21).

22. Process according to Claim 21, characterized in that the solid particles, which are substantially freed from flushing oil, are discharged via a sluice (24).

## Revendications

1. Dispositif de dépolymérisation de matières plastiques usagées et récupérées comprenant un réacteur clos (1) avec
a) un dispositif d'alimentation (18) en matières plastiques usagées et récupérées, de préférence en tête du réacteur,
b) un dispositif de soutirage (7) du dépolymère, de préférence dans le domaine de fond du réacteur,
c) un dispositif (4) de prélèvement des gaz formés et des produits condensables dans le domaine de tête du réacteur,
caractérisé par les caractéristiques suivantes :
- un système de circulation branché au réacteur pour chauffer de façon modérée le contenu du réacteur,
- une conduite ascensionnelle (2) intégrée au réacteur pour séparer les particules solides les plus grossières et
- une conduite de prélèvement (16) appartenant au système de circulation plongeant dans l'extrémité de la conduite ascensionnelle.

2. Dispositif selon la revendication 1,
caractérisé en ce que
la conduite ascensionnelle a la forme d'un tube (20) disposé essentiellement verticalement dans le réacteur.

3. Dispositif selon la revendication 1,
caractérisé en ce que
la conduite ascensionnelle est formée par une paroi de séparation (19) partageant le réacteur en zones différentes.

4. Dispositif selon au moins l'une des revendications précédentes,
caractérisé en ce que
le réacteur se rétrécit dans le domaine de fond, de préférence sous la forme d'une enveloppe conique reposant sur sa pointe.

5. Dispositif selon au moins l'une des revendications précédentes,
caractérisé en ce que
le système de circulation pour chauffer avec modération le contenu du réacteur comprend une conduite de prélèvement (16), une conduite d'entrée (17) ainsi qu'une pompe (5) et un four/échangeur de chaleur (6).

6. Dispositif selon au moins l'une des revendications précédentes,
caractérisé en ce que
le dispositif de prélèvement (7) est une conduite de chute (21) essentiellement verticale avec une dérivation (22) qui y est branchée sensiblement perpendiculairement en aval.

7. Dispositif selon au moins l'une des revendications précédentes,
caractérisé en ce que
la dérivation (22) est équipée d'accessoires de séparation mécaniques (23).

8. Dispositif selon au moins l'une des revendications précédentes,
caractérisé en ce que
la conduite de chute (21) est munie à son extrémité inférieure d'une vanne (24).

9. Dispositif selon la revendication 8,
caractérisé en ce qu'
au-dessus de la vanne (24) se trouve un dispositif d'addition (25) d'huile de rinçage.

10. Dispositif selon la revendication 9,
caractérisé en ce qu'
en aval de la vanne (24), est branché un dispositif de séparation (26) pour séparer l'huile de rinçage des particules solides.

11. Dispositif selon au moins l'une des revendications 1 à 7,
caractérisé en ce qu'
en aval de la conduite de chute (21), est branché un dispositif de séparation (26).

12. Dispositif selon la revendication 11,
caractérisé en ce qu'
est branché, sur le dispositif de séparation (26), un dispositif d'addition (25) de l'huile de rinçage.

13. Dispositif selon la revendication 11 ou 12,
caractérisé en ce qu'
en aval du dispositif de séparation (26) est branchée une vanne (24).

14. Dispositif selon la revendication 10 ou 11,
caractérisé en ce que
le dispositif de séparation (26) est un transporteur à raclettes ou une vis convoyeuse.

15. Procédé de dépolymérisation de matières plastiques usagées et récupérées,
caractérisé par
leur traitement à haute température dans un dispositif selon l'une des revendications 1 à 14.

16. Procédé selon la revendication 15,
caractérisé en ce qu'
on ajoute, par le dispositif d'addition (25), une huile de rinçage ayant une densité supérieure à celle du dépolymère en une quantité telle qu'elle provoque une faible vitesse d'écoulement vers le haut du liquide dans la conduite de chute entre le dispositif d'addition (25) et la dérivation (22).

17. Procédé selon la revendication 15 ou 16,
caractérisé en ce que
le dépolymère prélevé dans le réacteur traverse la conduite de chute (21) et qu'on dévie un courant de composants organiques essentiellement liquides du dépolymère par la dérivation (22), tandis que les particules solides traversent avec une vitesse de sédimentation suffisante la partie de la conduite de chute remplie d'huile de rinçage.

18. Procédé selon la revendication 17,
caractérisé en ce que
les particules solides après la traversée de la conduite de chute (21) sont entraînées via la vanne (24) avec une partie de l'huile de rinçage.

19. Procédé selon la revendication 18,
caractérisé en ce qu'
au moyen d'un dispositif de séparation (26), on sépare les particules solides du mélange soutiré via la vanne (24).

20. Procédé selon la revendication 19,
caractérisé en ce que
dans le dispositif de séparation (26) l'huile de rinçage plus lourde est entraînée par alimentation d'une huile de rinçage plus légère.

21. Procédé selon la revendication 15 ou 16,
caractérisé en ce qu'
après avoir traversé la conduite de chute (21), les particules solides traversent un dispositif de séparation (26).

22. Procédé selon la revendication 21,
caractérisé en ce que
les particules solides largement exemptes d'huile de rinçage sont soutirées via une vanne (24).
